# EUROPEAN PATENT APPLICATION

(11) **EP 4 513 696 A1**
(43) Date of publication of application: **26.02.2025**
(21) Application number: 23854273.2
(22) Date of filing: 07.08.2023
(51) Int. Cl.: H02H 7/122, H02H 5/04, H02M 7/42

(54) **POWER CONVERSION DEVICE AND PROTECTION METHOD THEREFOR**

(30) Priority: 15.08.2022 CN 202210976648
(71) Applicant: Huawei Digital Power Technologies Co., Ltd., Shenzhen, Guangdong 518043 (CN)
(72) Inventor: YU, Ting, Shenzhen, Guangdong 518043 (CN); ZHAN, Jinxiang, Shenzhen, Guangdong 518043 (CN); LIN, Tiansan, Shenzhen, Guangdong 518043 (CN); ZHANG, Fangpo, Shenzhen, Guangdong 518043 (CN)
(74) Representative: Maiwald GmbH
(86) International application number: PCT/CN2023/111471
(87) International publication number: WO 2024/037370

(57) **Abstract**

This application provides a power conversion device and a protection method for the power conversion device. The power conversion device includes a terminal board, an electric energy conversion circuit, and a controller. A first terminal and a first temperature sampling circuit are disposed on the terminal board. The first terminal is connected to a direct current power supply or the electric energy conversion circuit by using a protection switch. The first temperature sampling circuit is configured to collect a temperature parameter of the first terminal. The controller obtains the temperature parameter of the first terminal, and controls, when the temperature parameter of the first terminal is greater than a temperature parameter threshold, the protection switch to be turned off. According to this application, a temperature of a terminal whose temperature is to be measured can be obtained in time, and overtemperature protection can be implemented on the terminal in time when the temperature of the terminal whose temperature is to be measured is excessively high, thereby ensuring reliable running of the terminal of the power conversion device.

## Description

This application claims priority to Chinese Patent Application No. 202210976648.7, filed with the China National Intellectual Property Administration on August 15, 2022 and entitled "POWER CONVERSION DEVICE AND PROTECTION METHOD FOR POWER CONVERSION DEVICE", which is incorporated herein by reference in its entirety.

### TECHNICAL FIELD

This application relates to the field of power supply technologies, and in particular, to a power conversion device and a protection method for the power conversion device.

### BACKGROUND

A photovoltaic inverter usually uses a photovoltaic terminal as an input end of the photovoltaic inverter. The photovoltaic terminal transmits a current of a photovoltaic battery to the inside of the inverter through a reliable electrical connection, and implements current inversion, so that electric energy can be used by a terminal user or be used in a power grid. As an important component of the photovoltaic inverter, the photovoltaic terminal may be damaged when a temperature of the photovoltaic terminal is excessively high, and then the inverter is damaged. Therefore, it is particularly important to ensure reliable running of the photovoltaic terminal.

### SUMMARY

This application provides a power conversion device and a protection method for the power conversion device, so that a temperature of a terminal whose temperature is to be measured can be obtained in time, and overtemperature protection can be implemented on the terminal in time when the temperature of the terminal whose temperature is to be measured is excessively high, thereby ensuring reliable running of the terminal of the power conversion device.

According to a first aspect, this application provides a power conversion device. The power conversion device includes a terminal board, an electric energy conversion circuit, and a controller, a first terminal and a first temperature sampling circuit are disposed on the terminal board. The first terminal is connected to a direct current power supply or the electric energy conversion circuit by using a protection switch. The first temperature sampling circuit is configured to collect a temperature parameter of the first terminal. The controller obtains the temperature parameter of the first terminal, and when the temperature parameter of the first terminal is greater than a temperature parameter threshold, which indicates that a temperature of the first terminal is excessively high, controls the protection switch to be turned off, and disconnects in time a power supply loop in which the first terminal is located. This protects the first terminal, and further protects the power conversion device. A sampling delay can be effectively avoided because the first temperature sampling circuit beside the first terminal directly samples the temperature parameter of the first terminal, and the power conversion device can be ensured to obtain the temperature of the terminal whose temperature is to be measured in time, so that overtemperature protection can be implemented on the terminal in time when the temperature of the terminal whose temperature is to be measured is excessively high, thereby ensuring reliable running of the terminal. In addition, a sampling manner in which the first temperature sampling circuit beside the first terminal directly obtains the temperature parameter of the first terminal can also reduce an error of the collected temperature parameter, and improve control precision when the power conversion device protects the input terminal of the power conversion device.

With reference to the first aspect, in a first possible implementation, the controller further obtains a terminal current of the first terminal, and controls, when the temperature parameter of the first terminal is greater than the temperature parameter threshold, and the terminal current of the first terminal is greater than a current threshold, the protection switch to be turned off. Further, a terminal current determining condition manner is added to ensure accuracy of triggering the protection switch, avoid a wrong operation, and further improve control precision when the power conversion device protects the input terminal of the power conversion device.

With reference to the first aspect or the first possible implementation of the first aspect, in a second possible implementation, the first temperature sampling circuit includes a first thermistor, and the first thermistor is configured to detect the temperature parameter of the first terminal.

With reference to the second possible implementation of the first aspect, in a third possible implementation, the first temperature sampling circuit further includes a voltage follower. One end of the first thermistor is connected to a first reference power supply, the other end of the first thermistor is connected to a first input end of the voltage follower, and a second input end of the voltage follower is connected to an output end of the voltage follower. The temperature parameter is an output voltage of the voltage follower. In this implementation, the first temperature sampling circuit is simple, easy to control, and highly operable. In addition, because the first temperature sampling circuit is simple, stability of the power conversion device can also be improved.

With reference to the second possible implementation of the first aspect, in a fourth possible implementation, the first temperature sampling circuit further includes a first voltage divider resistor. One end of the first thermistor is connected to the first reference power supply, and the other end of the first thermistor is connected to the reference ground by using the first voltage divider resistor. The temperature parameter is a voltage of the first voltage divider resistor. In this implementation, the first temperature sampling circuit is simple, easy to control, and highly operable. In addition, because the first temperature sampling circuit is simple, stability of the power conversion device can also be improved.

With reference to the second possible implementation of the first aspect, in a fifth possible implementation, the first temperature sampling circuit further includes an inverting amplifier. One end of the first thermistor is connected to the first reference power supply, the other end of the first thermistor is connected to an inverting input end of the inverting amplifier, and a non-inverting input end of the inverting amplifier is connected to the reference ground. The temperature parameter is an output voltage of the inverting amplifier. The first temperature sampling circuit has various structures, and correspondingly, the terminal has various overtemperature determining conditions, and has high flexibility.

With reference to any one of the first aspect to the fifth possible implementation of the first aspect, in a sixth possible implementation, a distance between the first temperature sampling circuit and the first terminal is less than a preset value.

With reference to the first aspect, in a seventh possible implementation, a plurality of terminals are disposed on the terminal board, the plurality of terminals include the first terminal, the plurality of terminals are connected to the direct current power supply or the electric energy conversion circuit by using a plurality of protection switches corresponding to the plurality of terminals, and the plurality of terminals one-to-one correspond to the plurality of protection switches. Distances between the first temperature sampling circuit and the plurality of terminals are all less than a preset value, and the first temperature sampling circuit is configured to collect a first temperature parameter. The controller obtains the first temperature parameter, and when the first temperature parameter is greater than the temperature parameter threshold, which indicates that there is a terminal with an excessively high temperature in the plurality of terminals, controls the plurality of protection switches to be all turned off, and disconnects in time power supply loops in which the plurality of input terminals are located. This protects the plurality of input terminals, and further protects the power conversion device. It may be understood that, when finding that there is the input terminal with the excessively high temperature in the plurality of input terminals, the power conversion device directly turns off all the plurality of protection switches corresponding to the plurality of input terminals. This can improve security of the power conversion device. In addition, the plurality of terminals share a same first temperature sampling circuit. This can effectively reduce costs and a volume of the first temperature sampling circuit disposed on the terminal board, and reduce costs and a volume of the power conversion device.

With reference to the first aspect, in an eighth possible implementation, a plurality of terminals are disposed on the terminal board, the plurality of terminals include the first terminal, and the plurality of terminals are all connected to the direct current power supply or the electric energy conversion circuit by using the protection switch. Distances between the first temperature sampling circuit and the plurality of terminals are all less than a preset value, and the first temperature sampling circuit is configured to collect a first temperature parameter. The controller obtains the first temperature parameter, and controls, when the first temperature parameter is greater than the temperature parameter threshold, the protection switch to be turned off. It may be understood that the plurality of terminals share a same temperature sampling circuit and a same protection switch. This can effectively reduce costs and a volume of the power conversion device.

With reference to first aspect, in a ninth possible implementation, a plurality of terminals and a plurality of temperature sampling circuits are disposed on the terminal board, the plurality of terminals include a first group of terminals and a second group of terminals, the first group of terminals includes the first terminal, and the plurality of temperature sampling circuits include the first temperature sampling circuit and a second temperature sampling circuit. The plurality of terminals are connected to the direct current power supply or the electric energy conversion circuit by using a plurality of protection switches corresponding to the plurality of terminals, and the plurality of terminals one-to-one correspond to the plurality of protection switches. The first temperature sampling circuit is configured to collect temperature parameters of the first group of terminals, and the second temperature sampling circuit is configured to collect temperature parameters of the second group of terminals. The controller obtains the temperature parameters of the first group of terminals and the temperature parameters of the second group of terminals, and controls, when a first group of terminals whose temperature parameters are greater than the temperature parameter threshold exists in the first group of terminals and the second group of terminals, which indicates that a terminal with an excessively high temperature exists in the first group of terminals, protection switches corresponding to the first group of terminals to be turned off. It may be understood that, when finding that a group of input terminals with the excessively high temperature exists in the plurality of input terminals of the power conversion device, the power conversion device directly turns off all protection switches corresponding to the group of input terminals with the excessively high temperature. This can improve security of the power conversion device.

With reference to first aspect, in a tenth possible implementation, a plurality of terminals and a plurality of temperature sampling circuits are disposed on the terminal board, the plurality of terminals include a first group of terminals and a second group of terminals, the first group of terminals includes the first terminal, and the plurality of temperature sampling circuits include the first temperature sampling circuit and a second temperature sampling circuit. The plurality of terminals are connected to the direct current power supply or the electric energy conversion circuit by using the protection switch. The first temperature sampling circuit is configured to collect temperature parameters of the first group of terminals, and the second temperature sampling circuit is configured to collect temperature parameters of the second group of terminals. The controller obtains the temperature parameters of the first group of terminals and the temperature parameters of the second group of terminals, and controls, when a first group of terminals whose temperature parameters are greater than the temperature parameter threshold exists in the first group of terminals and the second group of terminals, the protection switch to be turned off. It may be understood that the plurality of terminals share a same protection switch. This can effectively reduce costs and a volume of the power conversion device or a power supply system in which the power conversion device is located.

With reference to any one of the seventh possible implementation to the tenth possible implementation of the first aspect, in an eleventh possible implementation, the plurality of terminals include the first terminal and a second terminal, and the first temperature sampling circuit includes the voltage follower, a first thermistor, and a second thermistor. One end of the first thermistor is connected to the first reference power supply, one end of the second thermistor is connected to a second reference power supply, both the other end of the first thermistor and the other end of the second thermistor are connected to the first input end of the voltage follower, and the second input end of the voltage follower is connected to the output end of the voltage follower. The first thermistor is configured to detect the temperature parameter of the first terminal, and the second thermistor is configured to detect a temperature parameter of the second terminal. The temperature parameter is an output voltage of the voltage follower. The first terminal and the second terminal can share one voltage follower in the first temperature sampling circuit. This can reduce a volume and costs of the first temperature sampling circuit, and can reduce a volume and costs of the power conversion device.

With reference to the eleventh possible implementation of the first aspect, in a twelfth possible implementation, the first temperature sampling circuit further includes a first diode, a first voltage divider resistor, a second diode, and a second voltage divider resistor. The other end of the first thermistor is separately connected to the first input end of the voltage follower and the reference ground by using the first diode and the first voltage divider resistor, and the other end of the second thermistor is separately connected to the first input end of the voltage follower and the reference ground by using the second diode and the second voltage divider resistor. The first temperature sampling circuit has various structures, so that the power conversion device has various structures and high flexibility.

With reference to any one of the first aspect to the twelfth possible implementation of the first aspect, in a thirteenth possible implementation, the protection switch includes a power transistor, a relay, or a contactor.

With reference to any one of the first aspect to the thirteenth possible implementation of the first aspect, in a fourteenth possible implementation, the power conversion device includes an inverter or a DC/DC converter.

With reference to any one of the first aspect to the fourteenth possible implementation of the first aspect, in a fifteenth possible implementation, the direct current power supply includes a photovoltaic panel, an energy storage battery, or a fuel cell. It may be understood that the power conversion device provided in this application is applicable to a photovoltaic power supply scenario, an energy storage power supply scenario, and a fuel cell power supply scenario, and is highly applicable.

According to a second aspect, this application provides a protection method for a power conversion device. The power conversion device includes a terminal board and an electric energy conversion circuit, a first terminal and a first temperature sampling circuit are disposed on the terminal board, and the first terminal is connected to a direct current power supply or the electric energy conversion circuit by using a protection switch. The method includes: The power conversion device obtains a temperature parameter of the first terminal by using a first temperature sampling circuit, and control, when the temperature parameter of the first terminal is greater than a temperature parameter threshold, a protection switch to be turned off.

With reference to the second aspect, in a first possible implementation, the power conversion device further obtains a terminal current of the first terminal, and controls, when the temperature parameter of the first terminal is greater than the temperature parameter threshold, and the terminal current of the first terminal is greater than a current threshold, the protection switch to be turned off.

With reference to the second aspect or the first possible implementation of the second aspect, in a second possible implementation, the first temperature sampling circuit includes a first thermistor, and the first thermistor is configured to detect the temperature parameter of the first terminal.

With reference to the second possible implementation of the second aspect, in a third possible implementation, the first temperature sampling circuit further includes a voltage follower. One end of the first thermistor is connected to a first reference power supply, the other end of the first thermistor is connected to a first input end of the voltage follower, and a second input end of the voltage follower is connected to an output end of the voltage follower. The temperature parameter is an output voltage of the voltage follower.

With reference to the second possible implementation of the second aspect, in a fourth possible implementation, the first temperature sampling circuit further includes a first voltage divider resistor. One end of the first thermistor is connected to the first reference power supply, and the other end of the first thermistor is connected to the reference ground by using the first voltage divider resistor. The temperature parameter is a voltage of the first voltage divider resistor.

With reference to the second possible implementation of the second aspect, in a fifth possible implementation, the first temperature sampling circuit further includes an inverting amplifier. One end of the first thermistor is connected to the first reference power supply, the other end of the first thermistor is connected to an inverting input end of the inverting amplifier, and a non-inverting input end of the inverting amplifier is connected to the reference ground. The temperature parameter is an output voltage of the inverting amplifier.

With reference to any one of the second aspect to the fifth possible implementation of the second aspect, in a sixth possible implementation, a distance between the first temperature sampling circuit and the first terminal is less than a preset value.

With reference to the second aspect, in a seventh possible implementation, a plurality of terminals are disposed on the terminal board, the plurality of terminals include the first terminal, the plurality of terminals are connected to the direct current power supply or the electric energy conversion circuit by using a plurality of protection switches corresponding to the plurality of terminals, and the plurality of terminals one-to-one correspond to the plurality of protection switches. Distances between the first temperature sampling circuit and the plurality of terminals are all less than a preset value, and the first temperature sampling circuit is configured to collect a first temperature parameter. The power conversion device obtains the first temperature parameter, and controls, when the first temperature parameter is greater than the temperature parameter threshold, the plurality of protection switches to be all turned off.

With reference to the second aspect, in an eighth possible implementation, a plurality of terminals are disposed on the terminal board, the plurality of terminals include the first terminal, and the plurality of terminals are all connected to the direct current power supply or the electric energy conversion circuit by using the protection switch. Distances between the first temperature sampling circuit and the plurality of terminals are all less than a preset value, and the first temperature sampling circuit is configured for a first temperature parameter. The power conversion device obtains the first temperature parameter, and controls, when the first temperature parameter is greater than the temperature parameter threshold, the protection switch to be turned off.

With reference to the second aspect, in a ninth possible implementation, a plurality of terminals and a plurality of temperature sampling circuits are disposed on the terminal board, the plurality of terminals include a first group of terminals and a second group of terminals, the first group of terminals includes the first terminal, and the plurality of temperature sampling circuits include the first temperature sampling circuit and a second temperature sampling circuit. The plurality of terminals are connected to the direct current power supply or the electric energy conversion circuit by using a plurality of protection switches corresponding to the plurality of terminals, and the plurality of terminals one-to-one correspond to the plurality of protection switches. The first temperature sampling circuit is configured to collect temperature parameters of the first group of terminals, and the second temperature sampling circuit is configured to collect temperature parameters of the second group of terminals. The power conversion device obtains the temperature parameters of the first group of terminals and the temperature parameters of the second group of terminals, and controls, when a first group of terminals whose temperature parameters are greater than the temperature parameter threshold exists in the first group of terminals and the second group of terminals, protection switches corresponding to the first group of terminals to be turned off.

With reference to the second aspect, in a tenth possible implementation, a plurality of terminals and a plurality of temperature sampling circuits are disposed on the terminal board, the plurality of terminals include a first group of terminals and a second group of terminals, the first group of terminals includes the first terminal, and the plurality of temperature sampling circuits include the first temperature sampling circuit and a second temperature sampling circuit. The plurality of terminals are connected to the direct current power supply or the electric energy conversion circuit by using the protection switch. The first temperature sampling circuit is configured to collect temperature parameters of the first group of terminals, and the second temperature sampling circuit is configured to collect temperature parameters of the second group of terminals. The power conversion device obtains the temperature parameters of the first group of terminals and the temperature parameters of the second group of terminals, and controls, when a first group of terminals whose temperature parameters are greater than the temperature parameter threshold exists in the first group of terminals and the second group of terminals, the protection switch to be turned off.

With reference to any one of the seventh possible implementation to the tenth possible implementation of the second aspect, in an eleventh possible implementation, the plurality of terminals include the first terminal and a second terminal, and the first temperature sampling circuit includes the voltage follower, a first thermistor, and a second thermistor. One end of the first thermistor is connected to the first reference power supply, one end of the second thermistor is connected to a second reference power supply, both the other end of the first thermistor and the other end of the second thermistor are connected to the first input end of the voltage follower, and the second input end of the voltage follower is connected to the output end of the voltage follower. The first thermistor is configured to detect the temperature parameter of the first terminal, and the second thermistor is configured to detect a temperature parameter of the second terminal. The temperature parameter is an output voltage of the voltage follower.

With reference to the eleventh possible implementation of the second aspect, in a twelfth possible implementation, the first temperature sampling circuit further includes a first diode, a first voltage divider resistor, a second diode, and a second voltage divider resistor. The other end of the first thermistor is separately connected to the first input end of the voltage follower and the reference ground by using the first diode and the first voltage divider resistor, and the other end of the second thermistor is separately connected to the first input end of the voltage follower and the reference ground by using the second diode and the second voltage divider resistor.

It should be understood that implementations and beneficial effects of the foregoing aspects of this application may be referred to each other.

### BRIEF DESCRIPTION OF DRAWINGS

FIG. 1 is a schematic diagram of an application scenario of a power conversion device according to this application;
FIG. 2a is a schematic diagram of a structure of a power conversion device according to this application;
FIG. 2b is a schematic diagram of another structure of a power conversion device according to this application;
FIG. 3 is a schematic diagram of location distribution of a temperature sampling circuit and a terminal whose temperature is to be measured according to this application;
FIG. 4a is a schematic diagram of a structure of a temperature sampling circuit according to this application;
FIG. 4b is a schematic diagram of another structure of a temperature sampling circuit according to this application;
FIG. 4c is a schematic diagram of still another structure of a temperature sampling circuit according to this application;
FIG. 5a is a schematic diagram of still another structure of a power conversion device according to this application;
FIG. 5b is a schematic diagram of yet another structure of a power conversion device according to this application;
FIG. 6 is a schematic physical diagram of a terminal board according to this application;
FIG. 7a is a schematic diagram of yet another structure of a temperature sampling circuit according to this application;
FIG. 7b is a schematic diagram of still yet another structure of a temperature sampling circuit according to this application;
FIG. 8a is a schematic diagram of still yet another structure of a power conversion device according to this application;
FIG. 8b is a schematic diagram of a further structure of a power conversion device according to this application; and
FIG. 9 is a schematic flowchart of a protection method for a power conversion device according to this application.

### DESCRIPTION OF EMBODIMENTS

A power conversion device provided in this application may be an inverter, a DC/DC converter, or another power-consuming equipment that includes an input end. The power conversion device provided in this application is applicable to different application scenarios, for example, a photovoltaic power supply scenario, an energy storage power supply scenario, and an uninterruptible power supply (Uninterruptible Power Supply, UPS) power supply scenario. The following uses the photovoltaic power supply scenario as an example.

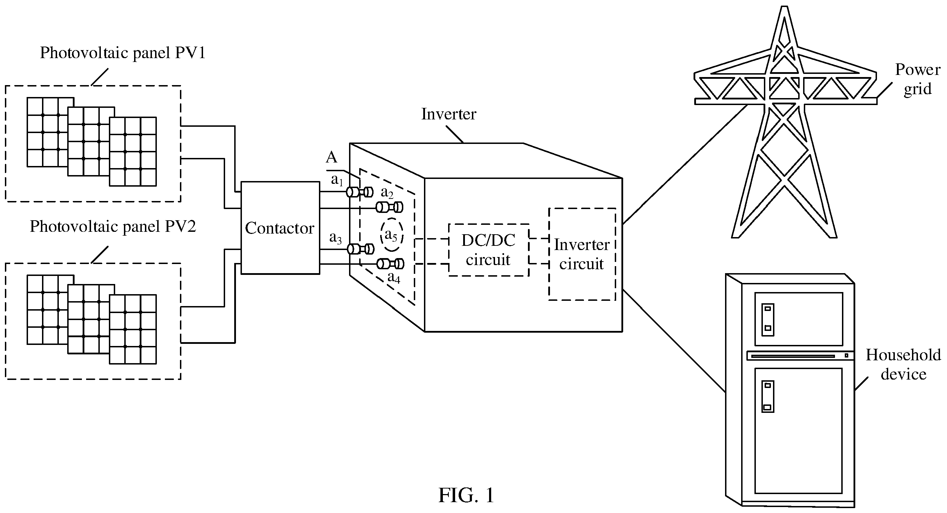

FIG. 1 is a schematic diagram of an application scenario of a power conversion device according to this application. In a photovoltaic power supply scenario, the power conversion device provided in this application may be an inverter shown in FIG. 1, and a terminal board and an electric energy conversion circuit provided in this application may be respectively a terminal board A and a DC/DC circuit shown in FIG. 1. A protection switch provided in this application may be a contactor shown in FIG. 1. The inverter includes the terminal board A, where input terminals a₁, a₂, a₃, and a₄ of the inverter and a temperature sampling circuit as are disposed on the terminal board A. The input terminal a₁ and the input terminal a₂ of the inverter are respectively connected to two ends of a photovoltaic panel PV1 by using a contactor, the input terminal a₃ and the input terminal a₄ are respectively connected to two ends of a photovoltaic panel PV2 by using the contactor, and an output end is connected to an alternating current power grid or a household device. The inverter further includes the DC/DC circuit and an inverter circuit. An input end of the DC/DC circuit is connected to the four input terminals of the inverter, and an output end of the DC/DC circuit is connected to the output end of the inverter through the inverter circuit. After the inverter starts to run, the DC/DC circuit in the inverter performs direct current conversion on direct currents input by the photovoltaic panel PV1 and the photovoltaic panel PV2, and outputs, to the inverter circuit, direct currents obtained after the direct currents input by the input end are converted. The inverter circuit converts, into alternating currents, the direct currents obtained after the direct currents input by the input end are converted, and outputs the alternating currents from the output end, to supply power to various types of power-consuming equipment such as the alternating current power grid or an alternating current load (such as the household device). Similarly, after the inverter starts to work, the inverter collects, by using the temperature sampling circuit a₅, a temperature parameter of at least one input terminal of the four input terminals of the inverter, and when the temperature parameter of the at least one input terminal is greater than a temperature parameter threshold, which indicates that an input terminal with an excessively high temperature exists in the four input terminals of the inverter, the inverter controls the contactor to disconnect, and cuts off in time power supply loops where the four input terminals are located, that is, power supply loops of the photovoltaic panels PV1 and PV2. This implements overtemperature protection for the foregoing four input terminals, and protects the inverter. A sampling delay can be effectively avoided because the temperature sampling circuit as beside the input terminal can directly sample and conduct the temperature parameter of the input terminal in real time, and the inverter can be ensured to obtain the temperature of the input terminal of the inverter in time, so that overtemperature protection can be implemented on the input terminal of the inverter in time when the temperature of the input terminal of the inverter is excessively high, thereby ensuring reliable running of the input terminal. Examples of application scenarios of the power conversion device provided in this application are only illustrated above, but are not exhaustive. The application scenarios are not limited in this application.

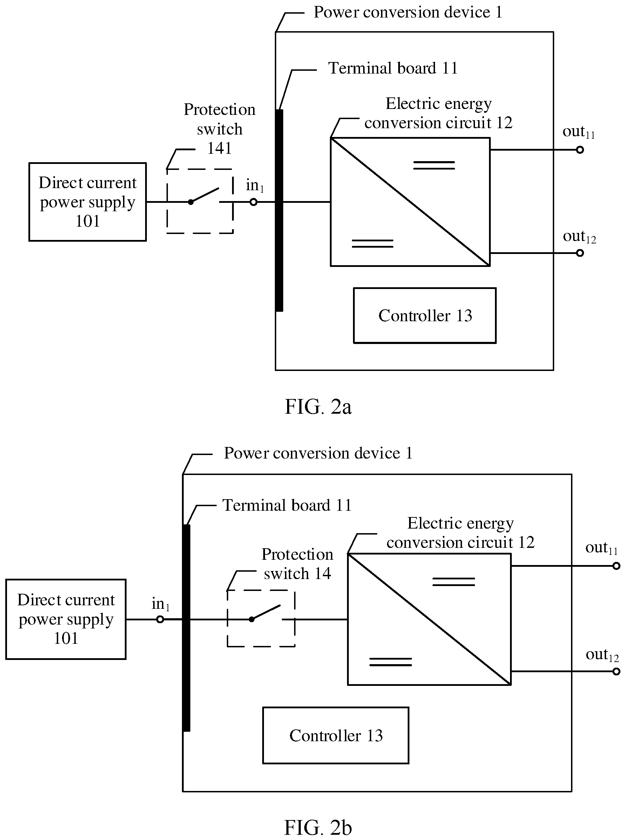

The following describes an example of a working principle of the power conversion device provided in this application with reference to FIG. 2a to FIG. 8b.

FIG. 2a is a schematic diagram of a structure of a power conversion device according to this application. As shown in FIG. 2a, the power conversion device 1 includes a terminal board 11, an electric energy conversion circuit 12, and a controller 13. A first terminal (that is, an input terminal in₁) and a first temperature sampling circuit (that is, a temperature sampling circuit 151) are disposed on the terminal board 11, and the temperature sampling circuit 151 is configured to collect a temperature parameter of the input terminal in₁. The input terminal in₁ of the power conversion device 1 is connected to a direct current power supply 101 by using a protection switch 141, and two output terminals out₁₁ and out₁₂ of the power conversion device 1 are connected to loads. An input end of the electric energy conversion circuit 12 is connected to the input terminal in₁ of the power conversion device 1, and two output ends are separately connected to the two output ends out₁₁ and out₁₂ of the power conversion device 1.

The electric energy conversion circuit 12 includes a DC/DC circuit or an inverter circuit. It should be noted that, when the electric energy conversion circuit 12 is the DC/DC circuit, the power conversion device 1 is a DC/DC converter; when the electric energy conversion circuit 12 is the DC/DC circuit and the power conversion device 1 further includes an inverter circuit (located between the output end of the electric energy conversion circuit 12 and the output end of the power conversion device 1), the power conversion device 1 is an inverter; or when the electric energy conversion circuit 12 is the inverter circuit, the power conversion device 1 is an inverter. The direct current power supply 101 includes a photovoltaic panel, an energy storage battery, or a fuel cell, and the protection switch 14 includes a power transistor, a relay, or a contactor. For example, the power transistor may be a metal-oxide-semiconductor field-effect transistor (metal-oxide-semiconductor field-effect transistor, MOSFET), an insulated gate bipolar transistor (Insulated Gate Bipolar Transistor, IGBT), a gallium nitride (Gallium Nitride, GaN) transistor, or the like. Optionally, in addition to being located outside the power conversion device 1, the protection switch 141 may also be located inside the power conversion device 1. For details, refer to a power conversion device 1 shown in FIG. 2b. As shown in FIG. 2b, the protection switch 141 is disposed between the input terminal in₁ and the input end of the electric energy conversion circuit 12.

In an optional implementation, after the power conversion device 1 starts to run, the temperature sampling circuit 151 starts to collect a temperature parameter of the input terminal in₁ in real time. The controller 13 obtains the temperature parameter of the input terminal in₁ by using the temperature sampling circuit 151, and when the temperature parameter of the input terminal in₁ is greater than a temperature parameter threshold, which indicates that a temperature of the input terminal in₁ is excessively high, controls the protection switch 141 to be turned off, and disconnects in time a power supply loop in which the input terminal in₁ is located. This protects the input terminal in₁, and further protects the power conversion device 1.

In this embodiment of this application, a sampling delay can be effectively avoided because the temperature sampling circuit 151 beside the input terminal in₁ directly samples the temperature parameter of the input terminal in₁, and the power conversion device 1 can be ensured to obtain the temperature of the input terminal in₁ in time, so that overtemperature protection can be implemented on the input terminal in₁ in time when the temperature of the input terminal in₁ is excessively high, thereby ensuring reliable running of the input terminal in₁. In addition, a sampling manner in which the temperature sampling circuit 151 beside the input terminal in₁ directly collects the temperature parameter of the input terminal in₁ can also reduce an error of the collected temperature parameter, and improve control precision when the power conversion device 1 protects the input terminal of the power conversion device 1.

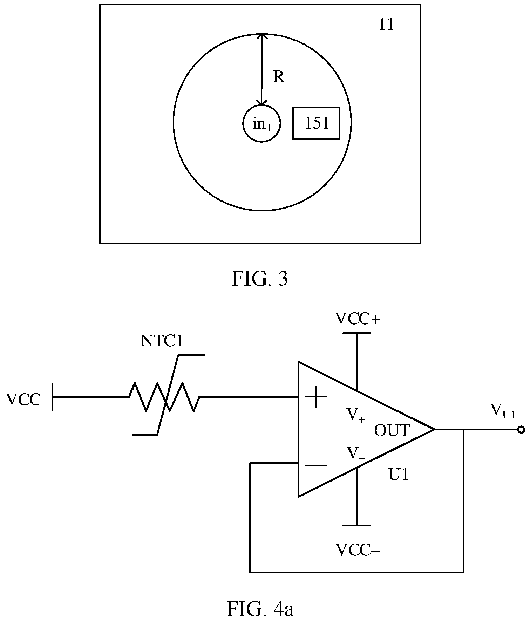

Refer to FIG. 2a. A distance between the temperature sampling circuit 151 and the input terminal in₁ is less than a preset value R. Specifically, the temperature sampling circuit 151 is located in a circular area whose radius is the preset value R shown in FIG. 3. The preset value R only needs to ensure that the first temperature sampling circuit 151 can collect a correct temperature parameter of the input terminal in₁. A specific value of the preset value R is not limited in this application.

In an optional embodiment, FIG. 4a is a schematic diagram of a structure of a temperature sampling circuit according to this application. As shown in FIG. 4a, the temperature sampling circuit 151 includes a first thermistor NTC1 and a voltage follower U1. One end of the first thermistor NTC1 is connected to a first reference power supply VCC, the other end of the first thermistor NTC1 is connected to a positive input end of the voltage follower U1, and a negative input end of the voltage follower U1 is connected to an output end of the voltage follower U1. For example, the first reference power supply VCC is a 5 V direct current power supply.

Specifically, after the power conversion device 1 starts to work, the first thermistor NTC1 in the temperature sampling circuit 151 converts a temperature of the input terminal in₁ into a voltage value V_{NTC1}, and inputs a voltage value VCC-V_{NTC1} into the voltage follower U1. The voltage follower U1 outputs the voltage value input by the positive input end of the voltage follower U1 to obtain a temperature parameter of the input terminal in₁, that is, an output voltage V_{U1} of the voltage follower U1 is equal to VCC-V_{NTC1}. The controller 13 obtains the output voltage V_{U1} of the voltage follower U1 by using the temperature sampling circuit 151, and when the output voltage V_{U1} of the voltage follower U1 is greater than a temperature parameter threshold (that is, a first voltage threshold), which indicates that the temperature of the input terminal in₁ is excessively high, controls the protection switch 141 to be turned off, and disconnects in time a power supply loop in which the input terminal in₁ is located. This protects the input terminal in₁, and further protects the power conversion device 1.

Optionally, the controller 13 further collects a terminal current of the input terminal in₁ by using the current sampling circuit, and when the output voltage V_{U1} of the voltage follower U1 is greater than the first voltage threshold and the terminal current of the input terminal in₁ is greater than a current threshold, which indicates that the temperature of the input terminal in₁ is excessively high, controls the protection switch 141 to be turned off. It may be understood that, a terminal current determining condition manner is added to ensure accuracy of triggering the protection switch 141, avoid a wrong operation, and further improve control precision when the power conversion device 1 protects the input terminal of the power conversion device 1.

Optionally, the temperature sampling circuit 151 in FIG. 4a may further include a single-pole eight-throw switch. The single-pole eight-throw switch is configured to control whether the temperature sampling circuit 151 can obtain the temperature parameter of the input terminal corresponding to the temperature sampling circuit 151. The other end of the first thermistor NTC1 is connected to the positive input end of the voltage follower U1 by using the single-pole eight-throw switch. It may be understood that, a single-pole eight-throw switch manner is added to ensure that the temperature sampling circuit 151 works only when the power conversion device 1 needs to obtain the temperature parameter of the input terminal, and reduce power consumption of the power conversion device 1.

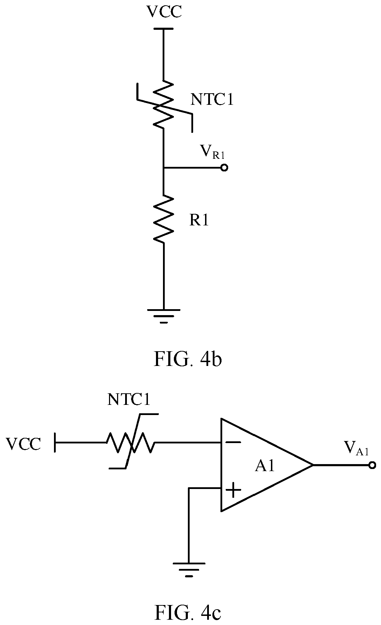

In another optional embodiment, FIG. 4b is a schematic diagram of another structure of a temperature sampling circuit according to this application. As shown in FIG. 4b, the temperature sampling circuit 151 includes a first thermistor NTC1 and a first voltage divider resistor R1. One end of the first thermistor NTC1 is connected to the first reference power supply VCC, and the other end of the first thermistor NTC1 is connected to the reference ground by using the first voltage divider resistor R1. For example, the first reference power supply VCC is a 5 V direct current power supply.

Specifically, after the power conversion device 1 starts to work, a resistance value of the first thermistor NTC1 in the temperature sampling circuit 151 varies with a temperature of the input terminal in₁. Specifically, a resistance value of the first thermistor NTC1 decreases as the temperature of the input terminal in₁ increases. A temperature parameter of the input terminal in₁, that is, a voltage V_{R1} of the first voltage divider resistor R1, changes accordingly. The controller 13 obtains the voltage V_{R1} of the first voltage divider resistor R1 by using the temperature sampling circuit 151, and when the voltage V_{R1} of the first voltage divider resistor R1 is greater than a temperature parameter threshold (that is, a second voltage threshold), which indicates that the temperature of the input terminal in₁ is excessively high, controls the protection switch 141 to be turned off, and disconnects in time a power supply loop in which the input terminal in₁ is located. This protects the input terminal in₁, and further protects the power conversion device 1.

Optionally, the controller 13 further collects a terminal current of the input terminal in₁ by using the current sampling circuit, and when the voltage V_{R1} of the first voltage divider resistor R1 is greater than the second voltage threshold and the terminal current of the input terminal in₁ is greater than a current threshold, which indicates that the temperature of the input terminal in₁ is excessively high, controls the protection switch 141 to be turned off. It may be understood that, a terminal current determining condition manner is added to ensure accuracy of triggering the protection switch 141, avoid a wrong operation, and further improve control precision when the power conversion device 1 protects the input terminal of the power conversion device 1.

Optionally, the temperature sampling circuit 151 in FIG. 4b may further include a single-pole eight-throw switch. The single-pole eight-throw switch is configured to control whether the temperature sampling circuit 151 can obtain the temperature parameter of the input terminal corresponding to the temperature sampling circuit 151. The single-pole eight-throw switch may be disposed between the first thermistor NTC1 and the first voltage divider resistor R1. It may be understood that, a single-pole eight-throw switch manner is added to ensure that the temperature sampling circuit 151 works only when the power conversion device 1 needs to obtain the temperature parameter of the input terminal, and reduce power consumption of the power conversion device 1.

In still another optional embodiment, FIG. 4c is a schematic diagram of still another structure of a temperature sampling circuit according to this application. As shown in FIG. 4c, the temperature sampling circuit 151 includes a first thermistor NTC1 and an inverting amplifier A1. One end of the first thermistor NTC1 is connected to a first reference power supply VCC, the other end of the first thermistor NTC1 is connected to an inverting input end of the inverting amplifier A1, and a non-inverting input end of the inverting amplifier A1 is connected to a reference ground. For example, the first reference power supply VCC is a 5 V direct current power supply.

Specifically, after the power conversion device 1 starts to work, the first thermistor NTC1 in the temperature sampling circuit 151 converts a temperature of the input terminal in₁ into a voltage value V_{NTC1}, and inputs a voltage value VCC-V_{NTC1} into the inverting amplifier A1. The inverting amplifier A1 performs inverting amplification on the voltage value input by the inverting input end of the inverting amplifier A1 to obtain a temperature parameter of the input terminal in₁, that is, an output voltage V_{A1} of the inverting amplifier A1 is equal to µ(VCC-V_{NTC1}), where µ is an amplification coefficient of the inverting amplifier A1, and µ<0. The controller 13 obtains the output voltage V_{A1} of the inverting amplifier A1 by using the temperature sampling circuit 151, and when the output voltage V_{A1} of the inverting amplifier A1 is greater than a temperature parameter threshold (that is, a third voltage threshold), which indicates that the temperature of the input terminal in₁ is excessively high, controls the protection switch 141 to be turned off, and disconnects in time a power supply loop in which the input terminal in₁ is located. This protects the input terminal in₁, and further protects the power conversion device 1.

Optionally, the controller 13 further collects a terminal current of the input terminal in₁ by using the current sampling circuit, and when the output voltage V_{A1} of the inverting amplifier A1 is greater than the third voltage threshold and the terminal current of the input terminal in₁ is greater than a current threshold, which indicates that the temperature of the input terminal in₁ is excessively high, controls the protection switch 141 to be turned off. It may be understood that, a terminal current determining condition manner is added to ensure accuracy of triggering the protection switch 141, avoid a wrong operation, and further improve control precision when the power conversion device 1 protects the input terminal of the power conversion device 1.

Optionally, the temperature sampling circuit 151 in FIG. 4c may further include a single-pole eight-throw switch. The single-pole eight-throw switch is configured to control whether the temperature sampling circuit 151 can obtain the temperature parameter of the input terminal corresponding to the temperature sampling circuit 151. The other end of the first thermistor NTC1 is connected to the non-inverting input end of the inverting amplifier A1 by using the single-pole eight-throw switch. It may be understood that, a single-pole eight-throw switch manner is added to ensure that the temperature sampling circuit 151 works only when the power conversion device 1 needs to obtain the temperature parameter of the input terminal, and reduce power consumption of the power conversion device 1.

It should be noted that the first thermistor NTC1 in the temperature sampling circuit 151 is a unique thermal sensitive element (that is, an element that converts a temperature into an electrical signal). In other words, temperature sampling on the input terminal in₁ may be completed by using only the first thermistor NTC1. For diversity of the temperature sampling circuit 151, different elements may also be connected to the first thermistor NTC1. When elements connected to the first thermistor NTC1 are different, the temperature parameter of the input terminal in₁ may change with the element connected to the first thermistor NTC1. Therefore, the temperature sampling circuit 151 has various structures, and correspondingly, the input terminal in₁ has various overtemperature determining conditions, and has high flexibility. An element connected to the first thermistor NTC1 is not limited in this application. In addition, the temperature sampling circuits 151 in this application all directly conduct the temperature of the input terminal by using the thermistor. Because a temperature measurement range of the thermistor reaches -40°C to +150°C, the temperature sampling circuit 151 has a wide measurement range, and is highly applicable.

It may be understood that, a sampling delay can be effectively avoided because the temperature sampling circuit 151 beside the input terminal in₁ directly samples the temperature parameter of the input terminal in₁, and the power conversion device 1 can be ensured to obtain the temperature of the input terminal in₁ in time, so that overtemperature protection can be implemented on the input terminal in₁ in time when the temperature of the input terminal in₁ is excessively high, thereby ensuring reliable running of the input terminal in₁. In addition, a sampling manner in which the temperature sampling circuit 151 beside the input terminal in₁ directly collects the temperature parameter of the input terminal in₁ can also reduce an error of the collected temperature parameter, and improve control precision when the power conversion device 1 protects the input terminal of the power conversion device 1. In addition, the temperature sampling circuit 151 has a simple structure, is easy to control, is easy to operate, and can further improve stability of the power conversion device 1. In addition, the temperature sampling circuit 151 has various structures and high flexibility, and can also improve structure diversity of the power conversion device 1.

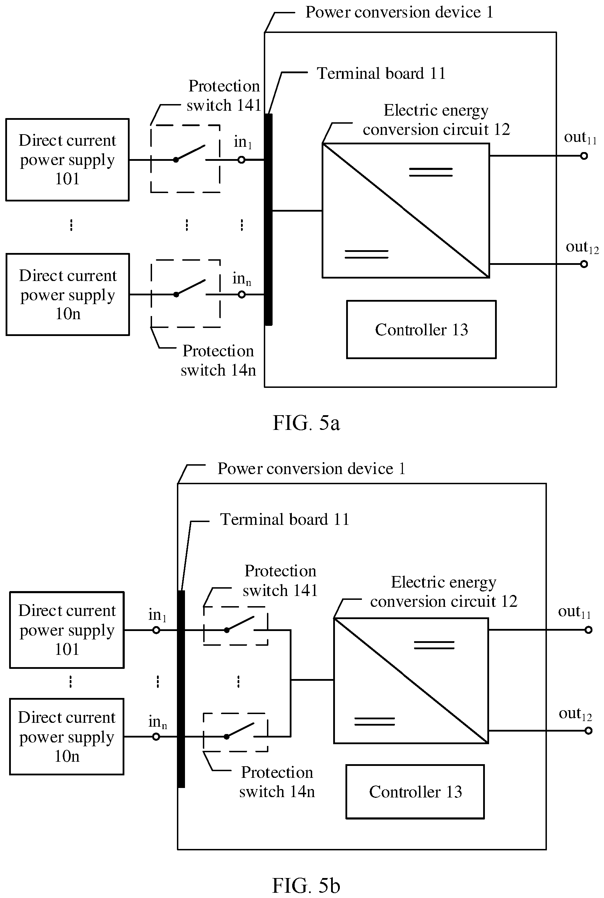

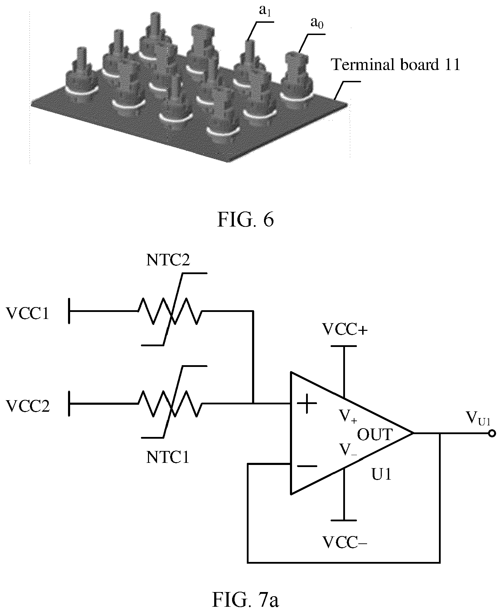

FIG. 5a is a schematic diagram of still another structure of a power conversion device according to this application. As shown in FIG. 5a, a power conversion device 1 includes a terminal board 11, an electric energy conversion circuit 12, and a controller 13. n terminals (that is, an input terminal in₁, ..., an input terminal inₙ) and a first temperature sampling circuit (that is, a temperature sampling circuit 151) are disposed on the terminal board 11, where n is an integer greater than 1. The temperature sampling circuit 151 is configured to collect a temperature parameter of at least one of the n input terminals. The input terminal in₁ of the power conversion device 1 is connected to a direct current power supply 101 by using a protection switch 141 corresponding to the power conversion device 1, ..., and the input terminal inₙ is connected to a direct current power supply 10n by using a protection switch 14n corresponding to the input terminal inₙ. Two output ends outi₁ and out₁₂ of the power conversion device 1 are connected to loads. An input end of the electric energy conversion circuit 12 is connected to the input terminal in₁ of the power conversion device 1, and two output ends are separately connected to the two output ends out₁₁ and out₁₂ of the power conversion device 1. Optionally, in addition to being located outside the power conversion device 1, the protection switch 141, ..., and the protection switch 14n may also be located inside the power conversion device 1. For details, refer to a power conversion device 1 shown in FIG. 5b. As shown in FIG. 5b, the input terminal in₁ is connected to the input end of the electric energy conversion circuit 12 by using the protection switch 141 corresponding to the input terminal in₁, ..., and the input terminal inₙ is connected to the input end of the electric energy conversion circuit 12 by using the protection switch 14n corresponding to the input terminal inₙ. A physical diagram of the terminal board 11 is the terminal board 11 in FIG. 6, and a physical diagram of the input terminal is welded PV terminals a₁ or a₂ in FIG. 6.

In an optional implementation, when the temperature sampling circuit 151 corresponds to the n input terminals, distances between the temperature sampling circuit 151 and each of the n input terminals are all less than a preset value R. After the power conversion device 1 starts to run, the controller 13 obtains a temperature parameter, that is, a first temperature parameter, by using the temperature sampling circuit 151, where the first temperature parameter may be understood as a temperature parameter of each of the n input terminals, and namely, temperature parameters of the n terminals, and when the first temperature parameter is greater than a temperature parameter threshold, which indicates that there is a terminal with an excessively high temperature in the n input terminals, controls the protection switch 141, ..., and the protection switch 14n to be all turned off, and disconnects in time power supply loops in which the n input terminals are located. This protects the n input terminals, and further protects the power conversion device 1. It may be understood that, when finding that there is the input terminal with the excessively high temperature in a plurality of input terminals, the power conversion device 1 directly turns off all the plurality of protection switches corresponding to the plurality of input terminals. This can improve security of the power conversion device 1.

Optionally, the controller 13 further collects a terminal current of each of the n input terminals by using the current sampling circuit, to obtain n terminal currents, and when the first temperature parameter is greater than the temperature parameter threshold, and a first input terminal whose terminal current is greater than the current threshold exists in the n input terminals, which indicates that there is the terminal with the excessively high temperature in the n input terminals and the input terminal with the excessively high temperature is the first input terminal, controls a protection switch corresponding to the first input terminal to be turned off. It may be understood that, a terminal current determining condition manner is added to accurately determine a specific input terminal with an excessively high temperature. In addition, a manner of disconnecting only the input terminal with the excessively high temperature can ensure that the power conversion device 1 can still normally supply power to the load when there are some input terminals with excessively high temperatures, and improve stability of the power conversion device 1.

The following uses n=2 as an example, that is, an input terminal in₁ and an input terminal in₂ are disposed on the terminal board 11, to illustrate the temperature sampling circuit 151.

In an optional embodiment, FIG. 7a is a schematic diagram of yet another structure of a temperature sampling circuit according to this application. As shown in FIG. 7a, the temperature sampling circuit 151 includes a first thermistor NTC1, a second thermistor NTC2, and a voltage follower U1. One end of the first thermistor NTC1 is connected to a first reference power supply VCC1, one end of the second thermistor NTC2 is connected to a second reference power supply VCC2, both the other end of the first thermistor NTC1 and the other end of the second thermistor NTC2 are connected to a positive input end of the voltage follower U1, and a negative input end of the voltage follower U1 is connected to an output end of the voltage follower U1. The first thermistor NTC1 is configured to detect a temperature of the input terminal in₁, and the second thermistor NTC2 is configured to detect a temperature of the input terminal in₂. For example, both the first reference power supply VCC1 and the second reference power supply VCC2 are 5 V direct current power supplies.

Specifically, after the power conversion device 1 starts to work, the first thermistor NTC1 in the temperature sampling circuit 151 converts the temperature of the input terminal in₁ into a voltage value V_{NTC1}, and inputs a voltage value VCC-V_{NTC1} into the voltage follower U1; and the second thermistor NTC2 converts the temperature of the input terminal in₂ into a voltage value V_{NTC2}, and inputs a voltage value VCC-V_{NTC2} into the voltage follower U1. The voltage follower U1 obtains a first temperature parameter by outputting the voltage value (that is, VCC-V_{NTC1} or VCC-V_{NTC2}) input by the positive input end of the voltage follower U1. Specifically, the first temperature parameter is a temperature parameter of the input terminal in₁, and is also a temperature parameter of the input terminal in₂, that is, an output voltage V_{U1} of the voltage follower U1 is equal to VCC-V_{NTC1}, or V_{U1} is equal to VCC-V_{NTC2}. The controller 13 obtains the output voltage V_{U1} of the voltage follower U1 by using the temperature sampling circuit 151, and when the output voltage V_{U1} of the voltage follower U1 is greater than a temperature parameter threshold (that is, a first voltage threshold), which indicates that there is an input terminal with an excessively high temperature in the input terminal in₁ and the input terminal in₂, controls both a protection switch 141 corresponding to the input terminal in₁ and a protection switch 142 corresponding to the input terminal in₂ to be turned off, and disconnects in time power supply loops where the input terminal in₁ and the input terminal in₂ are located. This protects the input terminal in₁ and the input terminal in₂, and further protects the power conversion device 1.

Optionally, the controller 13 further collects terminal currents of the input terminal in₁ and the input terminal in₂ by using a current sampling circuit, to obtain two terminal currents, and when the output voltage V_{U1} of the voltage follower U1 is greater than the first voltage threshold and there is a terminal current greater than the current threshold in the two terminal currents, which indicates that there is the input terminal with the excessively high temperature in the input terminal in₁ and the input terminal in₂, controls the protection switch 141 and the protection switch 142 to be turned off. It may be understood that, a terminal current determining condition manner is added to ensure accuracy of triggering the protection switch 141 and the protection switch 142, avoid a wrong operation, and further improve control precision when the power conversion device 1 protects the input terminal of the power conversion device 1.

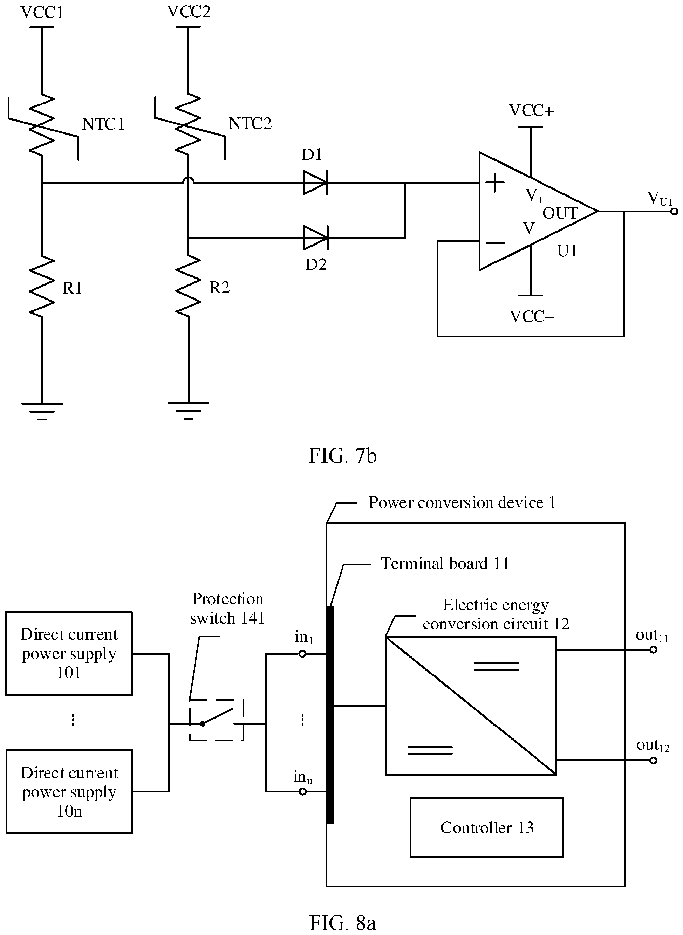

In another optional embodiment, FIG. 7b is a schematic diagram of still yet another structure of a temperature sampling circuit according to this application. As shown in FIG. 7b, the temperature sampling circuit 151 includes a first thermistor NTC1, a second thermistor NTC2, a first voltage divider resistor R1, a second voltage divider resistor R2, a first diode D1, a second diode D2, and a voltage follower U1.

One end of the first thermistor NTC1 is connected to a first reference power supply VCC1, one end of the second thermistor NTC2 is connected to a second reference power supply VCC2, the other end of the first thermistor NTC1 is connected to one end of the first voltage divider resistor R1 and an anode of the first diode D1, the other end of the first voltage divider resistor R1 is connected to the reference ground, and a cathode of the first diode D1 is connected to a positive input end of the voltage follower U1. The other end of the second thermistor NTC2 is connected to one end of the second voltage divider resistor R2 and an anode of the second diode D2, the other end of the second voltage divider resistor R2 is connected to the reference ground, a cathode of the second diode D2 is connected to the positive input end of the voltage follower U1, and a negative input end of the voltage follower U1 is connected to an output end of the voltage follower U1. The first thermistor NTC1 is configured to detect a temperature of the input terminal in₁, and the second thermistor NTC2 is configured to detect a temperature of the input terminal in₂. For example, both the first reference power supply VCC1 and the second reference power supply VCC2 are 5 V direct current power supplies.

Specifically, after the power conversion device 1 starts to work, the first thermistor NTC1 in the temperature sampling circuit 151 converts the temperature of the input terminal in₁ into a voltage value V_{NTC1}, and inputs a voltage value VCC-V_{NTC1} into the anode of the first diode D1; and the second thermistor NTC2 converts the temperature of the input terminal in₂ into a voltage value V_{NTC2}, and inputs a voltage value VCC-V_{NTC2} into the anode of the second diode D2. When an anode voltage of the first diode D1 reaches a conduction voltage of the first diode D1 or an anode voltage of the second diode D2 reaches a conduction voltage of the first diode D1, the positive input end of the voltage follower U1 receives the VCC-V_{NTC1} or the VCC-V_{NTC2}, and outputs the voltage value (that is, the VCC-V_{NTC1} or the VCC-V_{NTC2}) input by the positive input end of the voltage follower U1, to obtain a first temperature parameter. Specifically, the first temperature parameter is a temperature parameter of the input terminal in₁, and is also a temperature parameter of the input terminal in₂, that is, an output voltage V_{U1} of the voltage follower U1 is equal to VCC-V_{NTC1}, or V_{U1} is equal to VCC-V_{NTC2}. The controller 13 obtains the output voltage V_{U1} of the voltage follower U1 by using the temperature sampling circuit 151, and when the output voltage V_{U1} of the voltage follower U1 is greater than a temperature parameter threshold (that is, a first voltage threshold), which indicates that there is an input terminal with an excessively high temperature in the input terminal in₁ and the input terminal in₂, controls both a protection switch 141 corresponding to the input terminal in₁ and a protection switch 142 corresponding to the input terminal in₂ to be turned off, and disconnects in time power supply loops where the input terminal in₁ and the input terminal in₂ are located. This protects the input terminal in₁ and the input terminal in₂, and further protects the power conversion device 1.

Optionally, the controller 13 further collects terminal currents of the input terminal in₁ and the input terminal in₂ by using a current sampling circuit, to obtain two terminal currents, and when the output voltage V_{U1} of the voltage follower U1 is greater than the first voltage threshold and there is a terminal current greater than the current threshold in the two terminal currents, which indicates that there is the input terminal with the excessively high temperature in the input terminal in₁ and the input terminal in₂, controls the protection switch 141 and the protection switch 142 to be turned off. It may be understood that, a terminal current determining condition manner is added to ensure accuracy of triggering the protection switch 141 and the protection switch 142, avoid a wrong operation, and further improve control precision when the power conversion device 1 protects the input terminal of the power conversion device 1.

It may be understood that, a sampling delay can be effectively avoided because one temperature sampling circuit 151 beside the plurality of input terminals directly samples temperature parameters of the plurality of input terminals, and the power conversion device 1 can be ensured to obtain temperatures of the plurality of input terminals whose temperatures are to be measured in time, so that overtemperature protection can be implemented on the input terminals of the power conversion device 1 in time when of the input terminals whose temperatures are to be measured are excessively high, thereby ensuring reliable running of the input terminals of the power conversion device 1. In addition, a sampling manner in which the temperature sampling circuit 151 beside the plurality of input terminals directly collects temperature parameters of the plurality of input terminals can also reduce an error of the collected temperature parameters, and improve control precision when the power conversion device 1 protects the input terminal of the power conversion device 1. In addition, the temperature sampling circuit 151 has a simple structure, is easy to control, is easy to operate, and can further improve stability of the power conversion device 1. In addition, the temperature sampling circuit 151 has various structures and high flexibility, and can also improve structure diversity of the power conversion device 1. In addition, the plurality of input terminals may share one voltage follower U1 in the temperature sampling circuit 151 shown in FIG. 7a and FIG. 7b. This can reduce a volume and costs of the temperature sampling circuit 151, and reduce a volume and costs of the power conversion device 1.

In an optional implementation, when n input terminals are disposed on the terminal board 11, m temperature sampling circuits (that is, a temperature sampling circuit 151, a temperature sampling circuit 152, ..., and a temperature sampling circuit 15m) corresponding to the n input terminals are also disposed on the terminal board 11, where 2≤m≤n. The n input terminals include m groups of input terminals, that is, a first group of input terminals, a second group of input terminals, ..., and a m^{th} group of input terminals. A quantity of terminals included in each of the m groups of input terminals is greater than or equal to 1, and the quantity of terminals included in each group of input terminals may be the same or may be different. Each temperature sampling circuit is configured to collect a temperature parameter of a group of input terminals corresponding to each temperature sampling circuit. When a group of input terminals corresponding to one temperature sampling circuit includes a plurality of terminals, the temperature parameter that is of the group of input terminals corresponding to the temperature sampling circuit and that is collected by the temperature sampling circuit is a value, and the value may be understood as a temperature parameter of each input terminal in the group of input terminals corresponding to the temperature sampling circuit. A distance between each temperature sampling circuit and a group of input terminals corresponding to each temperature sampling circuit is less than a preset value R.

After the power conversion device 1 works, the m temperature sampling circuits collect temperature parameters of respective corresponding group of terminals, to obtain m temperature parameters. When the controller 13 obtains the m temperature parameters by using the m temperature sampling circuits, and determines, based on the m temperature parameters, that a target group input terminal whose temperature parameter is greater than a temperature parameter threshold exists in the m groups of input terminals, which indicates that the input terminal with excessively high temperature exists in the target group input terminal, the controller 13 controls protection switches corresponding to the target group input terminals to be all turned off.

For example, when both a temperature parameter of the first group of input terminals and a temperature parameter of the second group of input terminals in the m groups of input terminals are greater than the temperature parameter threshold, the controller 13 controls both a protection switch corresponding to the first group of input terminals and a protection switch corresponding to the second group of input terminals to be turned off.

For example, assuming that m=n=4, in this case, four input terminals and four temperature sampling circuits that one-to-one correspond to the four input terminals are disposed on the terminal board 11, the four terminals include a first group of input terminals, a second group of input terminals, a third group of input terminals, and a fourth group of input terminals, and a quantity of terminals included in each of the foregoing four groups of input terminals is 1. The controller 13 obtains four temperature parameters by using the foregoing four temperature sampling circuits, and when an input terminal whose temperature parameter is greater than a temperature parameter threshold exists in the four input terminals, the controller 13 controls a protection switch corresponding to the input terminal whose temperature parameter is greater than the temperature parameter threshold to be turned off.

It may be understood that, when finding that a group of input terminals with an excessively high temperature exists in the n input terminals of the power conversion device 1, the power conversion device 1 directly turns ff all protection switches corresponding to the group of input terminals with the excessively high temperature. This can improve security of the power conversion device 1.

Optionally, the controller 13 further obtains a terminal current of each of the n input terminals by using the current sampling circuit, to obtain the n terminal currents, and when a target group input terminal whose temperature parameter is greater than the temperature parameter threshold exists in the m groups of input terminals, and a first input terminal whose terminal current is greater than a current threshold exists in the target group of input terminals, which indicates that a terminal whose temperature is excessively high in the first group of input terminals is the first input terminal, and the controller 13 controls a protection switch corresponding to the first input terminal to be turned off. It may be understood that, a terminal current determining condition manner is added to accurately determine a specific input terminal with an excessively high temperature. In addition, a manner of disconnecting only the input terminal with the excessively high temperature can ensure that other input terminals in the power conversion device 1 except the input terminal with excessively high temperature can still work normally. This can ensure that the power conversion device 1 can still normally supply power to the load, and improve stability of the power conversion device 1.

It should be noted that, when each terminal corresponds to one temperature sampling circuit and temperature sampling circuits corresponding to the terminals are different, the temperature sampling circuit corresponding to each terminal may be any one of the temperature sampling circuits 151 shown in FIG. 4a to FIG. 4c. Correspondingly, the temperature parameter herein may be any one of the output voltage of the voltage follower U1, a voltage of the first voltage divider resistor R1, and an output voltage of an inverting amplifier A1. When a plurality of terminals correspond to one temperature sampling circuit, the temperature sampling circuit corresponding to the plurality of terminals may be any one of the temperature sampling circuits 151 shown in FIG. 7a and FIG. 7b. Correspondingly, the temperature parameter herein may be the output voltage of the voltage follower U1.

In this embodiment of this application, a sampling delay can be effectively avoided because the temperature sampling circuit 151 beside the input terminal whose temperature is to be measured directly samples the temperature parameter of the input terminal whose temperature is to be measured, and the power conversion device 1 can be ensured to obtain the temperature of the input terminal whose temperature is to be measured in time, so that overtemperature protection can be implemented on the input terminal in time when the temperature of the input terminal whose temperature is to be measured is excessively high, thereby ensuring reliable running of the input terminal of the power conversion device 1. In addition, a sampling manner in which the temperature sampling circuit 151 beside the input terminal whose temperature is to be measured directly collects the temperature parameter of the input terminal whose temperature is to be measured can also reduce an error of the collected temperature parameter, and improve control precision when the power conversion device protects the input terminal of the power conversion device 1. In addition, the temperature sampling circuit 151 has a simple structure, is easy to control, is easy to operate, and can further improve stability of the power conversion device 1. In addition, the temperature sampling circuit 151 has various structures and high flexibility, and can also improve structure diversity of the power conversion device 1.

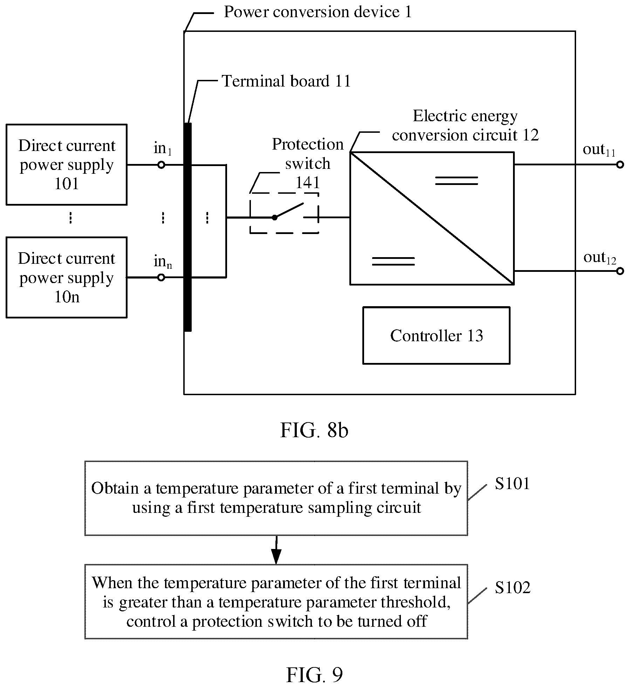

FIG. 8a is a schematic diagram of still yet another structure of a power conversion device according to this application. As shown in FIG. 8a, a power conversion device 1 includes a terminal board 11, an electric energy conversion circuit 12, and a controller 13. n terminals (that is, an input terminal in₁, ..., an input terminal inₙ) and a temperature sampling circuit 151 are disposed on the terminal board 11, where n is an integer greater than 1. The temperature sampling circuit 151 is configured to collect a temperature parameter of at least one of the n input terminals. The n input terminals (that is, the input terminals in₁, ..., and the input terminals inₙ) of the power conversion device 1 are all connected to n direct current power supplies (that is, a direct current power supply 101, ..., and a direct current power supply 10n) by using a protection switch 141. Two output ends outi₁ and out₁₂ of the power conversion device 1 are connected to loads. An input end of the electric energy conversion circuit 12 is connected to the n input terminals of the power conversion device 1, and two output ends are separately connected to the two output ends out₁₁ and out₁₂ of the power conversion device 1. Optionally, in addition to being located outside the power conversion device 1, the protection switch 141 may also be located inside the power conversion device 1. For details, refer to a power conversion device 1 shown in FIG. 8b. As shown in FIG. 8b, the input terminals in₁, ..., and the input terminal inₙ are all connected to the input end of the electric energy conversion circuit 12 by using the protection switch 141.

In an optional implementation, when the temperature sampling circuit 151 corresponds to the n input terminals, distances between the temperature sampling circuit 151 and each of the n input terminals are all less than a preset value R. After the power conversion device 1 starts to run, the controller 13 obtains a temperature parameter, that is, a first temperature parameter, by using the temperature sampling circuit 151, where the first temperature parameter may be understood as a temperature parameter of each of the n input terminals, and when the first temperature parameter is greater than a temperature parameter threshold, which indicates that there is a terminal with an excessively high temperature in the n input terminals, controls the protection switch 141 to be turned off, and disconnects in time power supply loops in which the n input terminals are located. This protects the n input terminals, and further protects the power conversion device 1. It may be understood that, when finding that there is the input terminal with the excessively high temperature in a plurality of input terminals, the power conversion device 1 directly disconnects the power supply loops in which the plurality of input terminals are located. This can improve security of the power conversion device 1.

Optionally, the controller 13 further collects a terminal current of each of the n input terminals by using the current sampling circuit, to obtain n terminal currents, and when the first temperature parameter is greater than the temperature parameter threshold, and a first input terminal whose terminal current is greater than the current threshold exists in the n input terminals, which indicates that there is the terminal with the excessively high temperature in the n input terminals and the input terminal with the excessively high temperature is the first input terminal, controls a protection switch 141 to be turned off. It may be understood that, a terminal current determining condition manner is added to ensure accuracy of triggering the protection switch 141, avoid a wrong operation, and further improve control precision when the power conversion device 1 protects the input terminal of the power conversion device 1.

Herein, when the temperature sampling circuit 151 corresponds to the plurality of input terminals, for a specific structure of the temperature sampling circuit 151, refer to the temperature sampling circuit 151 shown in FIG. 7a and FIG. 7b. Details are not described herein again.

In an optional implementation, when n input terminals are disposed on the terminal board 11, m temperature sampling circuits (that is, a temperature sampling circuit 151, a temperature sampling circuit 152, ..., and a temperature sampling circuit 15m) corresponding to the n input terminals are also disposed on the terminal board 11, where 2≤m≤n. The n input terminals include m groups of input terminals, that is, a first group of input terminals, a second group of input terminals, ..., and a m^{th} group of input terminals. A quantity of terminals included in each of the m groups of input terminals is greater than or equal to 1, and the quantity of terminals included in each group of input terminals may be the same or may be different. Each temperature sampling circuit is configured to collect a temperature parameter of a group of input terminals corresponding to each temperature sampling circuit. When a group of input terminals corresponding to one temperature sampling circuit includes a plurality of terminals, the temperature parameter that is of the group of input terminals corresponding to the temperature sampling circuit and that is collected by the temperature sampling circuit is a value, and the value may be understood as a temperature parameter of each input terminal in the group of input terminals corresponding to the temperature sampling circuit. A distance between each temperature sampling circuit and a group of input terminals corresponding to each temperature sampling circuit is less than a preset value R.

After the power conversion device 1 works, the m temperature sampling circuits collect temperature parameters of respective corresponding group of input terminals, to obtain m temperature parameters. When the controller 13 obtains the m temperature parameters by using the m temperature sampling circuits, and determines, based on the m temperature parameters, that a target group input terminal whose temperature parameter is greater than a temperature parameter threshold exists in the m groups of input terminals, which indicates that the input terminal with excessively high temperature exists in the target group input terminal, the controller 13 controls the protection switch 141 to be turned off. It may be understood that, when the power conversion device 1 finds that the terminal with the excessively high temperature exists in the input terminals of the power conversion device 1, the power conversion device 1 directly disconnects the power supply loops where the plurality of input terminals are located. This can improve security of the power conversion device 1.

Optionally, the controller 13 further obtains a terminal current of each of the n input terminals by using the current sampling circuit, to obtain the n terminal currents, and when a target group input terminal whose temperature parameter is greater than the temperature parameter threshold exists in the m groups of input terminals, and an input terminal whose terminal current is greater than a current threshold exists in the target group input terminal, which indicates that a temperature of the target group input terminal is excessively high, controls the protection switch 141 to be turned off. It may be understood that, a terminal current determining condition manner is added to ensure accuracy of triggering the protection switch 141, avoid a wrong operation, and further improve control precision when the power conversion device 1 protects the input terminal of the power conversion device 1.

It should be noted that, when each terminal corresponds to one temperature sampling circuit and temperature sampling circuits corresponding to the terminals are different, the temperature sampling circuit corresponding to each terminal may be any one of the temperature sampling circuits 151 shown in FIG. 4a to FIG. 4c. Correspondingly, the temperature parameter herein may be any one of the output voltage of the voltage follower U1, a voltage of the first voltage divider resistor R1, and an output voltage of an inverting amplifier A1. When a plurality of terminals correspond to one temperature sampling circuit, the temperature sampling circuit corresponding to the plurality of terminals may be any one of the temperature sampling circuits 151 shown in FIG. 7a and FIG. 7b. Correspondingly, the temperature parameter herein may be the output voltage of the voltage follower U1.

In this embodiment of this application, a sampling delay can be effectively avoided because the temperature sampling circuit 151 beside input terminals whose temperatures are to be measured directly samples all temperature parameters of the input terminals whose temperatures are to be measured, and the power conversion device 1 can be ensured to obtain the temperature of the input terminal whose temperature is to be measured in time, so that overtemperature protection can be implemented on the input terminal in time when the temperature of the input terminal whose temperature is to be measured is excessively high, thereby ensuring reliable running of the input terminal of the power conversion device 1. In addition, a sampling manner in which the temperature sampling circuit 151 beside the input terminal whose temperature is to be measured directly collects the temperature parameter of the input terminal whose temperature is to be measured can also reduce an error of the collected temperature parameter, and improve control precision when the power conversion device protects the input terminal of the power conversion device 1. In addition, the temperature sampling circuit 151 has a simple structure, is easy to control, is easy to operate, and can further improve stability of the power conversion device 1. In addition, the temperature sampling circuit 151 has various structures and high flexibility, and can also improve structure diversity of the power conversion device 1. In addition, power supply loops of a plurality of input terminals share a same protection switch. This can effectively reduce costs of the power conversion device 1 or a power supply system in which the power conversion device 1 is located.

It should be noted that, in this application, a location relationship between the temperature sampling circuit and a terminal whose temperature is to be measured may be, in addition to a distribution manner in which a distance between the temperature sampling circuit and the terminal whose temperature is to be measured is less than a preset distance R, a manner of only requiring to ensure that a distance between a thermal sensitive element (for example, a thermistor NTC) in the temperature sampling circuit and the terminal whose temperature is to be measured is less than the preset distance R. In this manner, a manner of releasing elements in the temperature sampling circuit other than the thermal sensitive element on the terminal board 11 is more flexible.

FIG. 9 is a schematic flowchart of a protection method for a power conversion device according to this application. The protection method for the power conversion device provided in embodiments of this application is applicable to the power conversion device 1 shown in FIG. 2a to FIG. 8b. The protection method for the power conversion device may include the following steps:
S101: Obtain a temperature parameter of a first terminal by using a first temperature sampling circuit.

In an optional implementation, after the power conversion device works, the first temperature sampling circuit starts to collect the temperature parameter of the first terminal. The power conversion device obtains the temperature parameter of the first terminal by using the first temperature sampling circuit.

In another optional implementation, when n terminals (including the first terminal) and one first temperature sampling circuit corresponding to the n terminals are disposed on a terminal board of the power conversion device, after the power conversion device works, the first temperature sampling circuit starts to collect a first temperature parameter, that is, a temperature parameter of each of the n input terminals. The power conversion device obtains the first temperature parameter by using the first temperature sampling circuit. n is an integer greater than 1.

In still another optional implementation, when n terminals (including the first terminal) and m temperature sampling circuits (including the first temperature sampling circuit) corresponding to the n terminals are disposed on a terminal board of the power conversion device, after the power conversion device works, the m temperature sampling circuits collect temperature parameters of respective corresponding groups of terminals, to obtain m temperature parameters. The power conversion device obtains the m temperature parameters by using the m temperature sampling circuits. n is an integer greater than 1, and 2≤m≤n. A quantity of terminals included in each of m groups of input terminals is greater than or equal to 1, and the quantity of terminals included in each group of input terminals may be the same or may be different.

S102: When the temperature parameter of the first terminal is greater than a temperature parameter threshold, control a protection switch to be turned off.

In an optional implementation, when the temperature parameter of the first terminal is greater than the temperature parameter threshold, the power conversion device controls a protection switch connected to the first terminal to be turned off.

In another optional implementation, when the temperature parameter of the first terminal is greater than the temperature parameter threshold and a terminal current of the first terminal is greater than a current threshold, the power conversion device controls a protection switch connected to the first terminal to be turned off.

In still another optional implementation, when the first temperature parameter is greater than the temperature parameter threshold, the power conversion device controls a protection switch corresponding to a plurality of terminals to be turned off, or controls a plurality of protection switches that one-to-one correspond to a plurality of terminals to be all turned off.

In yet another optional implementation, when the first temperature parameter is greater than the temperature parameter threshold and the first terminal whose terminal current is greater than a current threshold exists in the n terminals, the power conversion device controls a protection switch corresponding to the first terminal to be turned off.

In still yet another optional implementation, when a first group of terminals whose temperature parameters are greater than the temperature parameter threshold exists in the m groups of terminals, the power conversion device controls protection switches corresponding to the first group of terminals to be turned off.

In a further optional implementation, when a first group of terminals whose temperature parameters are greater than the temperature parameter threshold exists in the m groups of terminals and the first terminal whose terminal current is greater than a current threshold exists in the first group of terminals, the power conversion device controls a protection switch corresponding to the first terminal to be turned off.

In specific implementation, for more operations performed by the power conversion device in the protection method for the power conversion device provided in this application, refer to the implementations performed by the power conversion device 1 shown in FIG. 2a to FIG. 8b. Details are not described herein again.

In this embodiment of this application, a sampling delay can be effectively avoided because a temperature sampling circuit beside input terminals whose temperatures are to be measured directly samples all temperature parameters of the input terminals whose temperatures are to be measured, and the power conversion device can be ensured to obtain the temperature of the input terminal whose temperature is to be measured in time, so that overtemperature protection can be implemented on the input terminal in time when the temperature of the input terminal whose temperature is to be measured is excessively high, thereby ensuring reliable running of the input terminal of the power conversion device. In addition, a sampling manner in which the temperature sampling circuit beside the input terminal whose temperature is to be measured directly collects the temperature parameter of the input terminal whose temperature is to be measured can also reduce an error of the collected temperature parameter, improve control precision when the power conversion device protects the input terminal of the power conversion device, and is highly applicable.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion device, wherein the power conversion device comprises a terminal board, an electric energy conversion circuit, and a controller, and a first terminal and a first temperature sampling circuit are disposed on the terminal board;
the first terminal is connected to a direct current power supply or the electric energy conversion circuit by using a protection switch;
the first temperature sampling circuit is configured to collect a temperature parameter of the first terminal; and
the controller is configured to: obtain the temperature parameter of the first terminal; and control, when the temperature parameter of the first terminal is greater than a temperature parameter threshold, the protection switch to be turned off.

2. The power conversion device according to claim 1, wherein the controller is further configured to obtain a terminal current of the first terminal; and
the controller is configured to control, when the temperature parameter of the first terminal is greater than the temperature parameter threshold and the terminal current of the first terminal is greater than a current threshold, the protection switch to be turned off.

3. The power conversion device according to claim 1 or 2, wherein the first temperature sampling circuit comprises a first thermistor, and the first thermistor is configured to detect the temperature parameter of the first terminal.

4. The power conversion device according to claim 3, wherein the first temperature sampling circuit further comprises a voltage follower, wherein one end of the first thermistor is connected to a first reference power supply, the other end of the first thermistor is connected to a first input end of the voltage follower, and a second input end of the voltage follower is connected to an output end of the voltage follower; and the temperature parameter is an output voltage of the voltage follower.

5. The power conversion device according to any one of claims 1 to 4, wherein a distance between the first temperature sampling circuit and the first terminal is less than a preset value.

6. The power conversion device according to claim **1,** wherein a plurality of terminals are disposed on the terminal board, the plurality of terminals comprise the first terminal, the plurality of terminals are connected to the direct current power supply or the electric energy conversion circuit by using a plurality of protection switches corresponding to the plurality of terminals, and the plurality of terminals one-to-one correspond to the plurality of protection switches; and distances between the first temperature sampling circuit and the plurality of terminals are all less than a preset value, and the first temperature sampling circuit is configured to collect a first temperature parameter; and
the controller is configured to: obtain the first temperature parameter; and control, when the first temperature parameter is greater than the temperature parameter threshold, the plurality of protection switches to be all turned off.

7. The power conversion device according to claim 1, wherein a plurality of terminals are disposed on the terminal board, the plurality of terminals comprise the first terminal, and the plurality of terminals are all connected to the direct current power supply or the electric energy conversion circuit by using the protection switch; and distances between the first temperature sampling circuit and the plurality of terminals are all less than a preset value, and the first temperature sampling circuit is configured to collect a first temperature parameter; and
the controller is configured to: obtain the first temperature parameter; and control, when the first temperature parameter is greater than the temperature parameter threshold, the protection switch to be turned off.

8. The power conversion device according to claim 1, wherein a plurality of terminals and a plurality of temperature sampling circuits are disposed on the terminal board, the plurality of terminals comprise a first group of terminals and a second group of terminals, the first group of terminals comprise the first terminal, and the plurality of temperature sampling circuits comprise the first temperature sampling circuit and a second temperature sampling circuit; the plurality of terminals are connected to the direct current power supply or the electric energy conversion circuit by using a plurality of protection switches corresponding to the plurality of terminals, and the plurality of terminals one-to-one correspond to the plurality of protection switches; and the first temperature sampling circuit is configured to collect temperature parameters of the first group of terminals, and the second temperature sampling circuit is configured to collect temperature parameters of the second group of terminals; and
the controller is configured to: obtain the temperature parameters of the first group of terminals and the temperature parameters of the second group of terminals; and control, when a first group of terminals whose temperature parameters are greater than the temperature parameter threshold exists in the first group of terminals and the second group of terminals, protection switches corresponding to the first group of terminals to be turned off.

9. The power conversion device according to claim 1, wherein a plurality of terminals and a plurality of temperature sampling circuits are disposed on the terminal board, the plurality of terminals comprise a first group of terminals and a second group of terminals, the first group of terminals comprise the first terminal, and the plurality of temperature sampling circuits comprise the first temperature sampling circuit and a second temperature sampling circuit; the plurality of terminals are connected to the direct current power supply or the electric energy conversion circuit by using the protection switch; and the first temperature sampling circuit is configured to collect temperature parameters of the first group of terminals, and the second temperature sampling circuit is configured to collect temperature parameters of the second group of terminals; and
the controller is configured to: obtain the temperature parameters of the first group of terminals and the temperature parameters of the second group of terminals; and control, when a first group of terminals whose temperature parameters are greater than the temperature parameter threshold exists in the first group of terminals and the second group of terminals, the protection switch to be turned off.

10. The power conversion device according to any one of claims 6 to 9, wherein the plurality of terminals comprise the first terminal and a second terminal, the first temperature sampling circuit comprises a voltage follower, a first thermistor, and a second thermistor, one end of the first thermistor is connected to a first reference power supply, one end of the second thermistor is connected to a second reference power supply, both the other end of the first thermistor and the other end of the second thermistor are connected to a first input end of the voltage follower, and a second input end of the voltage follower is connected to an output end of the voltage follower; the first thermistor is configured to detect the temperature parameter of the first terminal, and the second thermistor is configured to detect a temperature parameter of the second terminal; and the temperature parameter is an output voltage of the voltage follower.

11. A protection method for a power conversion device, wherein the power conversion device comprises a terminal board and an electric energy conversion circuit, a first terminal and a first temperature sampling circuit are disposed on the terminal board, and the first terminal is connected to a direct current power supply or the electric energy conversion circuit by using a protection switch; and the method comprises:
obtaining a temperature parameter of the first terminal by using the first temperature sampling circuit; and
controlling, when the temperature parameter of the first terminal is greater than a temperature parameter threshold, the protection switch to be turned off.

12. The method according to claim 11, wherein a plurality of terminals are disposed on the terminal board, the plurality of terminals comprise the first terminal, the plurality of terminals are connected to the direct current power supply or the electric energy conversion circuit by using a plurality of protection switches corresponding to the plurality of terminals, and the plurality of terminals one-to-one correspond to the plurality of protection switches; and
the obtaining a temperature parameter of the first terminal by using the first temperature sampling circuit comprises:
obtaining a first temperature parameter by using the first temperature sampling circuit, wherein distances between the first temperature sampling circuit and the plurality of terminals are all less than a preset value; and
the controlling, when the temperature parameter of the first terminal is greater than a temperature parameter threshold, the protection switch to be turned off comprises:
controlling, when the first temperature parameter is greater than the temperature parameter threshold, the plurality of protection switches to be turned off.

13. The method according to claim 11, wherein a plurality of terminals are disposed on the terminal board, the plurality of terminals comprise the first terminal, and the plurality of terminals are all connected to the direct current power supply or the electric energy conversion circuit by using the protection switch; and
the obtaining a temperature parameter of the first terminal by using the first temperature sampling circuit comprises:
obtaining a first temperature parameter by using the first temperature sampling circuit, wherein distances between the first temperature sampling circuit and the plurality of terminals are all less than a preset value; and
the controlling, when the temperature parameter of the first terminal is greater than a temperature parameter threshold, the protection switch to be turned off comprises:
controlling, when the first temperature parameter is greater than the temperature parameter threshold, the protection switch to be turned off.

14. The method according to claim 11, wherein a plurality of terminals and a plurality of temperature sampling circuits are disposed on the terminal board, the plurality of terminals comprise a first group of terminals and a second group of terminals, the first group of terminals comprise the first terminal, and the plurality of temperature sampling circuits comprise the first temperature sampling circuit and a second temperature sampling circuit; and the plurality of terminals are connected to the direct current power supply or the electric energy conversion circuit by using a plurality of protection switches corresponding to the plurality of terminals, and the plurality of terminals one-to-one correspond to the plurality of protection switches; and
the obtaining a temperature parameter of the first terminal by using the first temperature sampling circuit comprises:
obtaining temperature parameters of the first group of terminals by using the first temperature sampling circuit, and obtaining temperature parameters of the second group of terminals by using the second temperature sampling circuit; and
the controlling, when the temperature parameter of the first terminal is greater than a temperature parameter threshold, the protection switch to be turned off comprises:
controlling, when a first group of terminals whose temperature parameters are greater than the temperature parameter threshold exists in the first group of terminals and the second group of terminals, protection switches corresponding to the first group of terminals to be turned off.

15. The method according to claim 11, wherein a plurality of terminals and a plurality of temperature sampling circuits are disposed on the terminal board, the plurality of terminals comprise a first group of terminals and a second group of terminals, the first group of terminals comprise the first terminal, and the plurality of temperature sampling circuits comprise the first temperature sampling circuit and a second temperature sampling circuit; and the plurality of terminals are connected to the direct current power supply or the electric energy conversion circuit by using the protection switches; and
the obtaining a temperature parameter of the first terminal by using the first temperature sampling circuit comprises:
obtaining temperature parameters of the first group of terminals by using the first temperature sampling circuit, and obtaining temperature parameters of the second group of terminals by using the second temperature sampling circuit; and
the controlling, when the temperature parameter of the first terminal is greater than a temperature parameter threshold, the protection switch to be turned off comprises:
controlling, when a first group of terminals whose temperature parameters are greater than the temperature parameter threshold exists in the first group of terminals and the second group of terminals, the protection switch to be turned off.
